# EUROPÄISCHE PATENTANMELDUNG

(11) **EP 2 608 378 A1**
(43) Veröffentlichungstag der Anmeldung: **26.06.2013**
(21) Anmeldenummer: 11194188.6
(22) Anmeldetag: 19.12.2011
(51) Int. Cl.: H02M 7/00, H02M 7/5387, H01L 27/12

(54) **Stromrichterschaltung**

(71) Anmelder: Siemens Aktiengesellschaft, 80333 München (DE)
(72) Erfinder: Weis, Benno, Dr., 91334 Hemhofen (DE)

(57) **Zusammenfassung**

Die Erfindung betrifft Stromrichterschaltung (4), die wenigstens zwei Submodule (22) in Reihenschaltung, die über eine erste Induktivität (20) elektrische Leistung aus einer eine Gleichspannung (18) abgebenden Leistungsquelle (8) bezieht, umfasst. Dabei weist jedes Submodul (22) eingangsseitig eine einphasige Halbbrücke (34) und lastseitig eine einphasige Vollbrücke (36) auf. Ferner ist die Halbbrücke (34) und die Vollbrücke (36) gleichspannungsseitig sowie parallel hierzu ein Zwischenkreiskondensator (38) geschaltet. Erfindungsgemäß weist die angegebene Stromrichterschaltung (4) ein Substrat (54) auf, auf dem die Halbbrücke (34), die Vollbrücke (36) und der Zwischenkreiskondensator (38) gemeinsam verschaltet sind.

## Beschreibung

Die Erfindung betrifft eine Stromrichterschaltung gemäß dem Oberbegriff des Anspruchs 1, einen Elektromotor mit der Stromrichterschaltung und ein Fahrzeug mit dem Elektromotor.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, in jedem Submodul die Halbbrücke, die Vollbrücke und den Zwischenkreiskondensator auf einem gemeinsamen Substrat zu verschalten.

Der Vorschlag geht davon aus, dass zum Aufbau jedes Submoduls eine gewöhnliche Brückenschaltung aus wenigstens drei Halbbrücken verwendet werden kann. Zur Abgabe einer dreiphasigen Wechselspannung kann diese Brückenschaltung gleichspannungsseitig mit einer elektrischen Eingangsleistung versorgt werden, wobei eine wechselgerichtete elektrische Ausgangsleistung jeweils an den Mittelpunkten der Halbbrücken abgegriffen werden kann. Die Zufuhr der elektrischen Eingangsleistung erfolgt dabei über elektrische Anschlüsse. Zur Verschaltung eines gleichspannungsseitig notwendigen Zwischenkreiskondensators können die elektrischen Anschlüsse zur elektrischen Leistungsversorgung mit verwendet werden.

In der Stromrichterschaltung der eingangs genannten Art wird einer Halbbrücke elektrische Leistung über einen Brückenzweig zugeführt und die Ausgangsleistung an den Mittelpunkten der verbleibenden, die Vollbrücke bildenden Halbbrücken abgegriffen. Damit liegt einer der beiden Anschlüsse zur elektrischen Leistungsversorgung des Submoduls an einem Mittelpunkt einer der Halbbrücken, so dass zur gleichspannungsseitigen Verschaltung des Zwischenkreiskondensators im Submodul ein weiterer elektrischer Anschluss notwendig ist. Zur Vermeidung dieses zusätzlichen Anschlusses werden die Halbbrücke, die Vollbrücke und der Zwischenkreiskondensator wie vorgeschlagen auf einem gemeinsamen Substrat verschaltet, so dass ein Potential der gleichspannungsseitigen Verschaltung der Halbbrücke, der Vollbrücke und des Zwischenkreiskondensators nach außen hin unzugänglich bleibt.

Die Erfindung gibt daher eine Stromrichterschaltung an, die wenigstens zwei Submodule in Reihenschaltung, die über eine erste Induktivität elektrische Leistung aus einer eine Gleichspannung abgebenden Leistungsquelle bezieht umfasst. Dabei weist jedes Submodul eingangsseitig eine einphasige Halbbrücke und lastseitig eine einphasige Vollbrücke auf. Ferner sind die Halbbrücke und die Vollbrücke gleichspannungsseitig sowie parallel hierzu ein Zwischenkreiskondensator geschaltet. Erfindungsgemäß weist die angegebene Stromrichterschaltung ein Substrat auf, auf dem die Halbbrücke, die Vollbrücke und der Zwischenkreiskondensator gemeinsam verschaltet sind.

Durch die gemeinsame Verschaltung der einzelnen Bauelemente eines Submoduls auf einem gemeinsamen Substrat lässt sich ein elektrischer Anschluss einsparen, wodurch nicht nur Kosten und Bauraum gespart werden können, durch die angegebene Stromrichterschaltung werden in besonders günstiger Weise auch die Kontaktwiderstände innerhalb der einzelnen Submodule reduziert.

In einer Weiterbildung der Erfindung ist der Zwischenkreiskondensator ein Keramikkondensator. Auf diese der Zwischenkreiskondensator nahe an den Schaltern der Halbbrücke und der Vollbrücke angeordnet werden, ohne durch eine eventuelle Temperaturentwicklung durch eine elektrische Leistungsführung durch die Schalter beeinflusst zu werden, da Keramikkondensatoren im Wesentlichen temperaturunabhängig sind.

In einer anderen Weiterbildung der Erfindung umfasst die angegebene Stromrichterschaltung eine weitere Halbbrücke, die zur Vollbrücke gleichspannungsseitig verschaltet ist. Die Weiterbildung geht von der Überlegung aus, dass es Hintergedanke der Stromrichterschaltung der eingangs genannten Art ist, eine elektrische Leistung aus der elektrischen Leistungsquelle skalierbar an die elektrischen Lasten eines oder mehrerer an die Stromrichterschaltung angeschlossener elektrischer Verbraucher abzugeben. Durch diese Skalierbarkeit können beispielsweise defekte elektrische Lasten, wie Motorwicklungen, in einem elektrischen Verbraucher wie einem Elektromotor überbrückt werden, wobei der Elektromotor gegebenenfalls mit einer reduzierten Leistung weiterbetrieben werden kann. Der Weiterbildung liegt jedoch die Erkenntnis zugrunde, dass es viele standardisierte elektrische Verbraucher gibt, die mit der Stromrichterschaltung der eingangs genannten Art wenn überhaupt, nur in einer ganz bestimmten Konfiguration betrieben werden können. So muss die Stromrichterschaltung für einen Standartmotor mit drei Motorwicklungen drei Submodule aufweisen. Für alle Stromrichterschaltung mit einer anderen Zellenzahl sind entsprechend Sondermotoren notwendig. Demgegenüber stellt die Weiterbildung sicher, dass mit der Stromrichterschaltung der eingangs genannten Art auch Standardverbraucher, wie ein Standardmotor betrieben werden können. Auf diese Weise ist die Möglichkeit, Standardlasten mit der Stromrichterschaltung der eingangs genannten Art jederzeit zu verwenden, gegeben.

In einer bevorzugten Weiterbildung der Erfindung bilden die weitere Halbbrücke und die Vollbrücke gemeinsam einen dreiphasigen Wechselrichter. Auf diese Weise kann an einem Submodul beispielsweise ein standartmäßiger Asynchronmotor angeschlossen werden.

Die Erfindung gibt auch einen Elektromotor an, der eine erste Motorwicklung, eine zweite Motorwicklung und eine angegebene Stromrichterschaltung umfasst. Dabei ist lastseitig mit dem ersten Submodul die erste Motorwicklung und lastseitig mit dem zweiten Submodul die zweite Motorwicklung verschaltet. Die Erfindung gibt auch ein Fahrzeug, das ein Rad und einen angegebenen Elektromotor zum Antrieb des Rades umfasst.

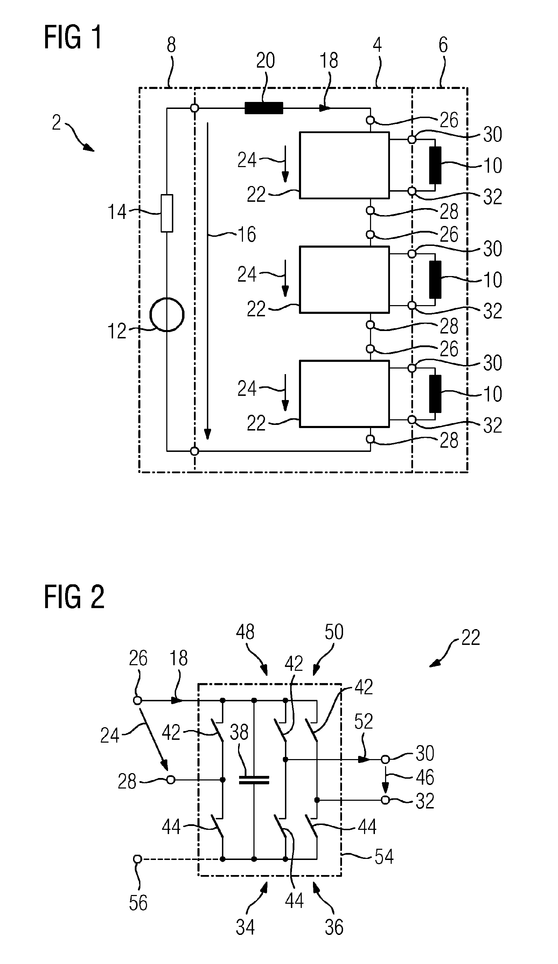

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG: 1 eine Schaltung mit einer beispielhaften Stromrichterschaltung,
- FIG: 2 ein beispielhaftes Submodul der Stromrichterschaltung gemäß einem Ausführungsbeispiel,
- FIG: 3 ein Gehäuse des Submoduls aus FIG 2 in einer Draufsicht, und
- FIG: 4 ein beispielhaftes Submodul der Stromrichterschaltung gemäß einem weiteren Ausführungsbeispiel zeigen.

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist drei elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an den modularen Umrichter 4 einen Batteriestrom 18 ab. Die Batteriespannung 16 ist eine Gleichspannung, während der Batteriestrom 18 ein Gleichstrom ist.

Die Stromrichterschaltung 4 weist eingangsseitig eine Induktivität 20 auf, die beispielsweise eine Drossel sein kann. Es ist jedoch auch möglich, dass diese Induktivität 20 allein durch die Verbindungsleitung zur Batterie 8 realisiert wird. An diese Induktivität 20 schließt sich in Reihe eine Reihenschaltung aus drei noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die elektrischen Lasten 10 mit elektrischer Energie in einer noch zu beschreibenden Weise. Für die Anzahl der Submodule 22 und elektrischen Lasten 10 wurde in der vorliegenden Ausführung drei gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die elektrischen Lasten 10 angeschlossen.

Es wird auf FIG 2 Bezug genommen, die beispielhaft den Aufbau eines der Submodule 22 in der Stromrichterschaltung 2 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 34, eine Vollbrücke 36 und einen Zwischenkreiskondensator 38 auf, die alle miteinander parallel verschaltet sind.

Die Eingangshalbbrücke 34 weist in einem ersten Brückenarm einen ersten Schalter 40 sowie in einem zweiten Brückenarm einen zum ersten Schalter 42 in Reihe geschalteten zweiten Schalter 44 auf. Die Schalter können als Leistungshalbleiterschalter, wie beispielsweise MOSFETs (Metalloxid-Feldeffekttransistor) ausgebildet sein. Abhängig von der Art des Leistungshalbleiterschalters können zum ersten Schalter antiparallel und zum zweiten Schalter parallel Freilaufdioden geschaltet werden.

Die Teilspannung 24 ist an den ersten Schalter 40 angelegt, während der zweite Schalter 42 in Reihe zwischen dem ersten Schalter 40 und der Vollbrücke 36 geschaltet ist. Somit kann der erste Schalter 40 aus Sicht der Vollbrücke 36 den Eingang 26, 28 aus der Batterie 8 kurzschließen, während der zweite Schalter 42 (bei geöffneten ersten Schalter 40) die Vollbrücke 36 in den Strompfad der Batterie 8 legen kann. Werden in jedem Submodul 22 die Schalter 40, 42 in gleicher Weise abwechselnd geöffnet und geschlossen, ist gemeinsam mit der Induktivität 20 ein Hochsetzsteller geschaffen, der die Summe aller an den Submodulen 22 abfallenden Teilspannungen 24 höher setzt, als die Batteriespannung 16. Weiterhin kann durch die Eingangshalbbrücke 34 die Vollbrücke 36 auch dauerhaft aus der Reihenschaltung der vier Submodule 22 entfernt werden, wenn der erste Schalter 40 dauerhaft geschlossen bleibt.

Der Vollbrücke 36 ist zum Wechselrichten der am Eingang 26, 28 des Submoduls 22 abfallenden Teilspannung 24, in eine Wechselspannung 46 am Ausgang 30, 32 des Submoduls 22 vorgesehen. Dazu weist die Vollbrücke 38 zwei Wechselrichterhalbbrücken 48, 50, die die gleichen Elemente, wie die Eingangshalbbrücke 40 aufweisen. Die Eingangshalbbrücke 34 und die beiden Wechselrichterhalbbrücken 48, 50 der Vollbrücke 36 sind parallel miteinander verschaltet. An einem Brückenzweig der Vollbrücke 36 kann die Wechselspannung 46 abgegriffen werden. Entsprechend wird an die elektrische Last 10 ein Wechselstrom 52 abgegeben. Die Vollbrücke 36 kann als Vierquadrantensteller aufgebaut werden. In diesem Fall sind eventuell notwendige Freilaufdioden im Unterschied zur Eingangshalbbrücke 34 immer antiparallel zu ihren jeweiligen Schaltern 42, 44 zu schalten.

Der Zwischenkreiskondensator 38 ist in der vorliegenden Ausführung dazu vorgesehen einen zu starken gleichspannungsseitigen Spannungsanstieg aufgrund von Überspannungen zu vermeiden. Dazu kann der Zwischenkreiskondensator 38 beispielsweise als Keramikkondensator ausgebildet sein, der von einer Betriebstemperatur des Submoduls 22 weitestgehend unabhängig ist.

Zur Versorgung der elektrischen Last 10 mit Blindleistung kann der Zwischenkreiskondensator 34 auch negative Leistungswellen eines Blindleistungsflusses zur elektrischen Last 10 speichern. Bestimmte elektrische Verbraucher 6, wie beispielsweise ein Asynchronmotor benötigen diesen Blindleistungsfluss für ihren Betrieb. In der Regel wird jedoch der Wirkleistungsfluss zwischen der Batterie 8 und dem elektrischen Verbraucher 6 geregelt. Durch diese Regelung ist die Richtung des Batteriestromes 18 durch die einzelnen Submodule 22 aufgrund der feststehenden Richtung der Teilspannungen 24 nicht ohne weiteres umkehrbar. Aus diesem Grund können negative Leistungswellen des Blindleistungsflusses das Submodul 22 nicht eingangsseitig verlassen und müssen im Submodul 22 zwischengespeichert werden, wofür der Zwischenkreiskondensator 38 vorhanden ist.

Die Eingangshalbbrücke 34, die Vollbrücke 36 und der Zwischenkreiskondensator 28 sind alle auf einem gemeinsamen Substrat 54, wie beispielsweise einer Leiterplatte, verschaltet. Diese gemeinsame Verschaltung vermeidet eine zusätzliche gleichspannungsseitige Verbindungsklemme 56 zwischen der Halbbrücke 34 und der Vollbrücke 36, über die der Zwischenkreiskondensator 38 gemeinsam mit der ersten Eingangsklemme 26 gleichspannungsseitig mit der Halbbrücke 34 und der Vollbrücke 36 verschaltet werden müsste. Da die zusätzliche Verbindungsklemme 56 durch die vorliegende Erfindung obsolet ist, ist sie in FIG 2 durch eine gestrichelte Linie angedeutet.

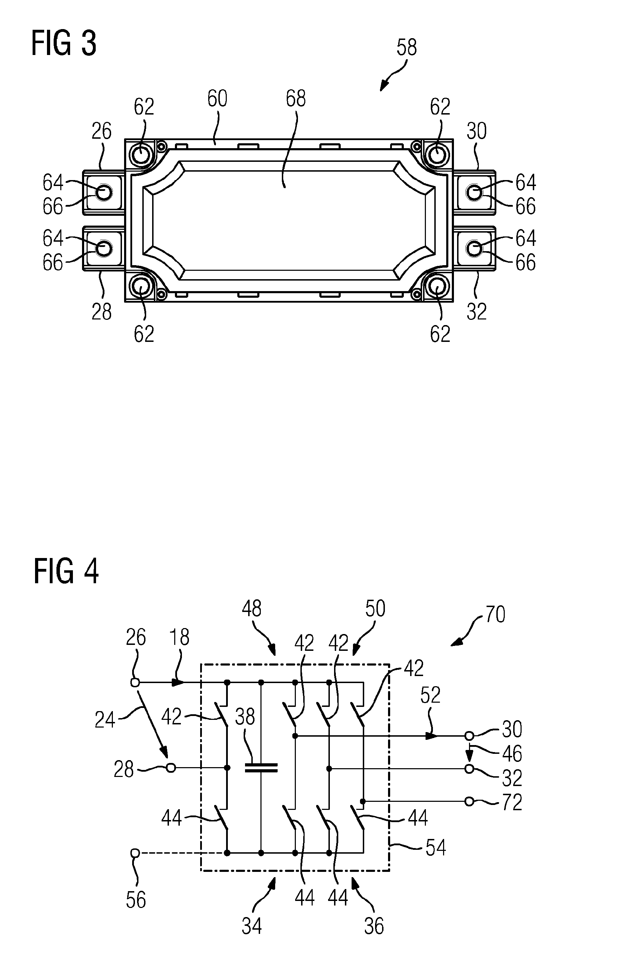

Es wird auf FIG 3 Bezug genommen, die ein Gehäuse 58 des Submoduls aus FIG 2 in einer Draufsicht zeigt. In FIG 2 werden zu FIG 1 und 2 gleiche Elemente mit gleichen Bezugszeichen versehen und nicht noch einmal beschrieben.

Das Gehäuse 58 weist eine Grundplatte 60 auf, durch die Durchgangsbohrungen 62 geführt sind. Durch die Durchgangsbohrungen 62 können nicht gezeigte Verbindungsschrauben geführt werden, um das Gehäuse 58 beispielsweise an einem Tragekörper zu befestigen, an dem auch die anderen Submodule 22 der Stromrichterschaltung 4 befestigt werden können.

Die Eingangsklemmen 26, 28 und die Ausgangsklemmen 30, 32 können an der Grundplatte 60 ausgebildet sind und Sacklochbohrungen 64 mit einem Innengewinde 66 aufweisen, in die zur elektrischen Kontaktierung der Klemmen 26 bis 32 mit einem Verbindungsdraht eine nicht gezeigte Schraube eingedreht werden kann.

Auf der Grundplatte 60 kann das Substrat 54 aufliegen, das mit einem Deckel 68 abgedeckt werden kann. Aus diesem Grund ist das Substrat 54 in FIG 3 nicht sichtbar.

Die Klemmen 26 bis 32 sind wie aus FIG 3 ersichtlich großflächig und vergleichsweise detailreich. Durch die Einsparung der weiteren Klemme 56 können daher spürbar nicht nur Platz sondern auch Herstellungskosten eingespart werden, da die weitere Klemme 56 in jedem einzelnen Submodul 22 der Stromrichterschaltung 4 eingespart werden kann.

Es wird auf FIG 4 Bezug genommen, die ein weiteres Beispiel für den Aufbau eines der Submodule 22 in der Stromrichterschaltung 2 der FIG 1 zeigt. In FIG 4 werden zu den FIG 1 bis 3 gleiche Elemente mit gleichen Bezugszeichen versehen und nicht noch einmal beschrieben.

In FIG 4 ist an die Vollbrücke 36 gleichspannungsseitig eine weitere Halbbrücke 70 angeschlossen, die analog zur Halbbrücke 34 aufgebaut ist. An dieser weiteren Halbbrücke 70 kann an einer dritten Ausgangsklemme 72 am Mittelpunkt der weiteren Halbbrücke 70 ein weiteres elektrisches Potential abgegriffen werden, so dass mit den elektrischen Potentialen an der ersten und zweiten Ausgangsklemme 30, 32 eine nicht weiter dargestellte dreiphasige Ausgangsspannung erzeugt werden kann, wobei die in FIG 2 gezeigte Wechselspannung 46 eine Phase dieser dreiphasigen Ausgangsspannung darstellt.

Durch die erfindungsgemäße gemeinsame gleichspannungsseitige Verschaltung aller Halbbrücken und des Zwischenkreiskondensators auf dem Substrat 54 kann auch in diesem Ausführungsbeispiel die zusätzliche Klemme 56 eingespart werden.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Stromrichterschaltung (4), umfassend wenigstens zwei Submodule (22) in Reihenschaltung, die über eine erste Induktivität (20) elektrische Leistung aus einer eine Gleichspannung (18) abgebenden Leistungsquelle (8) bezieht,
- wobei jedes Submodul (22) eingangsseitig eine einphasige Halbbrücke (34) und lastseitig eine einphasige Vollbrücke (36) aufweist, und
- wobei die Halbbrücke (34) und die Vollbrücke (36) gleichspannungsseitig sowie parallel hierzu ein Zwischenkreiskondensator (38) geschaltet sind,
**gekennzeichnet durch**
- ein Substrat (54) auf dem die Halbbrücke (34), die Vollbrücke (36) und der Zwischenkreiskondensator (38) gemeinsam verschaltet sind.

2. Stromrichterschaltung (4) nach Anspruch 1, **dadurch gekennzeichnet , dass** der Zwischenkreiskondensator (38) ein Keramikkondensator ist.

3. Stromrichterschaltung (4) nach Anspruch 1 oder 2, **gekennzeichnet, durch** eine weitere Halbbrücke (70), die zur Vollbrücke (36) gleichspannungsseitig verschaltet ist.

4. Stromrichterschaltung (4) nach Anspruch 3, **dadurch gekennzeichnet, dass** die weitere Halbbrücke (70) und die Vollbrücke (36) gemeinsam einen dreiphasigen Wechselrichter bilden.

5. Elektromotor umfassend eine erste Motorwicklung, eine zweite Motorwicklung und eine Stromrichterschaltung nach einem der vorstehenden Ansprüche, wobei lastseitig mit dem ersten Submodul (22) die erste Motorwicklung und lastseitig mit dem zweiten Submodul (22) die zweite Motorwicklung verschaltet ist.

6. Fahrzeug umfassend ein Rad und einen Elektromotor nach Anspruch 5 zum Antrieb des Rades.
